Europäisches Patentamt

(19) European Patent Office

Office européen des brevets

(11) Publication number: **0 108 730**
**B1**

(12) **EUROPEAN PATENT SPECIFICATION**

(45) Date of publication of patent specification: **19.07.89**

(21) Application number: **83830218.0**

(22) Date of filing: **03.11.83**

(51) Int. Cl.⁴: **C 02 F 3/12, C 02 F 3/26,**
**B 01 D 53/02, C 02 F 1/54**

(54) Apparatus and process for the treatment of liquid wastes.

(30) Priority: **03.11.82 IT 2404982**

(43) Date of publication of application:
**16.05.84 Bulletin 84/20**

(45) Publication of the grant of the patent:
**19.07.89 Bulletin 89/29**

(84) Designated Contracting States:
**CH FR GB LI**

(56) References cited:
**EP-A-0 003 548**
**DE-A-2 032 890**
**DE-A-2 105 420**
**DE-A-2 410 883**
**GB-A-2 023 122**
**US-A-3 673 083**

**LINDE BERICHTE AUS TECHNIK UND**
**WISSENSCHAFT, no. 51, 1982, page 48-54,**
**Wiesbaden, DE; C.H.GREGOR et al.: "Einsatz**
**des Sauerstoffbelebungsverfahrens bei**
**problematischen Industrieabwässern"**

(73) Proprietor: **Righetti, Gianmaria**
**Via Losanna, 29**
**Milano (IT)**

(72) Inventor: **Righetti, Gianmaria**
**Via Losanna, 29**
**Milano (IT)**

(74) Representative: **Caregaro, Silvio et al**
**c/o Società Italiana Brevetti S.p.A. Via Carducci**
**8**
**I-20123 Milano (IT)**

Courier Press, Leamington Spa, England.

EP 0 108 730 B1

## Description

The present invention relates to apparatus for the treatment of waste waters of a type comprising a unit for the biological oxidation of the wastes constituted by at least two purification towers connected in series and downstream of said towers sedimentation tanks for the concentration of active sludges and including means for injection of flocculants into such active sludges.

A plant and process of a similar type has been described and claimed by the same inventor in its Italian Patent No 1 132 002 granted on June 25, 1986.

The plant and process described in the above mentioned patent has eliminated or greatly reduced most of the drawbacks of the traditional plants and processes; namely and mainly the large site area required by such plants, the need to locate them far from inhabited area because of the mission and venting of extremely unpleasant, and sometimes toxic, aerosols and odours, their high operational costs, and their limited efficiency.

The plant and process described in the above mentioned Patent, has already achieved a notable success in reducing the direct and indirect area of the plant site and in reducing the pro-capita operating costs.

The subject matter of the present invention is therefore a process and apparatus which is a new development with respect to the subject matter of the above mentioned patent of the same inventor. In addition to the advantages of the prior apparatus and process, it offers novel and additional advantages notably such as, among others, flexibility of the plant which may handle large and small waste volumes, the ability to increase greatly the efficiency of compaction of the active sludges, the ability to operate totally or partially, with pure oxygen thereby further reducing the operating costs.

The apparatus according to the present invention comprises a unit for the biological oxidation of the wastes, a decanting system for the concentration of active sludges and a unit for recycling such sludges to the biological oxidation unit.

It is characterized by the arrangement of towers forming the oxidation unit indicated in claim 1.

The apparatus according to the present invention may further comprise equipment with a choking device to feed air and/or oxygen to the biological oxidation unit as well as an oxygen setation which will feed at least the biological oxidation unit and the sedimentation tank in case of a power failure.

As a further notable feature of the apparatus according to the present invention, the biological oxidation unit, embodies, at the location where residual undissolved oxygen and reaction gases are vented, special filters, preferably but not necessarily, of a bacteriostatic type such as to block any emission of gases or aerosols of whatever type which may carry pathogenic bacteria or other dangerous agents.

The apparatus and process for the treatment of liquid wastes of the present invention and their characteristics are illustrated in the annexed drawings, which show one possible constructive embodiment (but not the only one) wherein:

FIGURE 1 is a schematic view of a plant according to the present invention;

FIGURE 2 shows in detail a practical placement for the biological oxydation unit and one of the two sedimentation tanks;

FIGURE 3 shows a plan of the embodiment illustrated in Figure 2;

FIGURE 4 shows in detail a part of the plant object of the present invention;

FIGURE 5 shows a cut view of such detail according to section X—X of Figure 4.

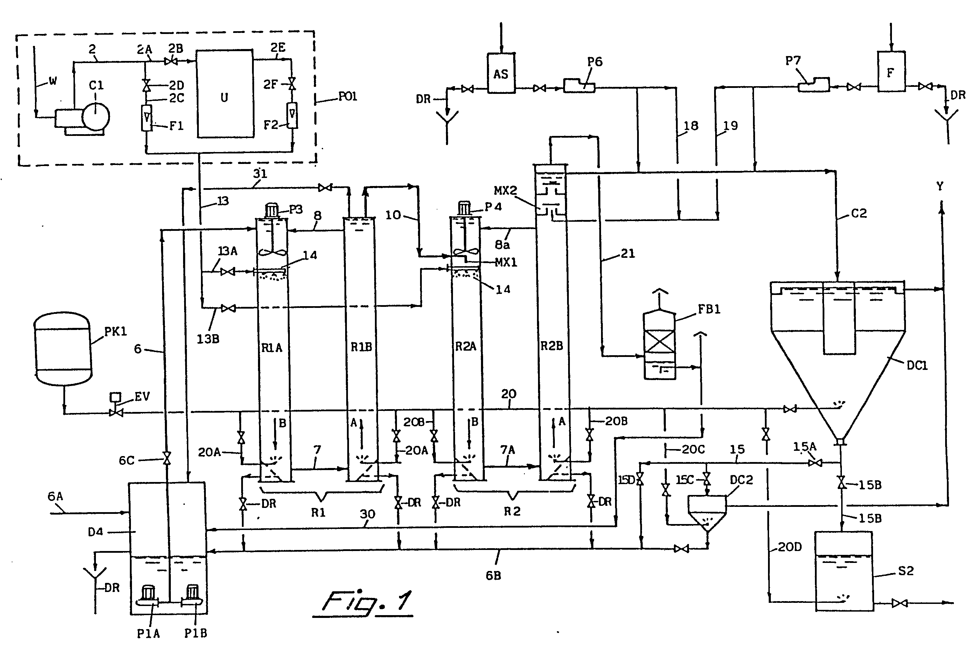

With particular reference to Fig. 1, the apparatus of the present invention, comprises a unit for the biological purification or oxygenation which embodies a series of tower-like oxidation chambers. In the form described as an example in the annexed figures, such unit comprises two pairs of towers R1 and R2 connected in series.

It is obvious that there could be a different number of pairs of towers connected in series.

Hereunder the first pair of towers R1 is described in detail. The second pair R2 will be substantially similar to the first pair. Of the pair R1, and this is valid also for the pair R2, only some fundamental features will be described, inasmuch as the general configuration and disposition of such towers is essentially the same as described in the above mentioned patent of the same inventor, to which reference is made for construction details.

The pair of towers R1 comprises a first tower R1A and a second tower R1B. The first R1A is fed at the top, through pipe 6, with liquors and wastes from a storage tank D4, which stores and receives fresh liquid wastes through pipe 6A and recycled sludges through pipe 6B.

Storage tank D4 contains at its lower extremity a pair of force pumps P1A, P1B, which will move the wastes to the top of the first tower R1A through pipe 6 and valve 6C.

The liquid wastes thus fed to tower R1A will flow down to the bottom of the tower and through pipe 7, which connects the lower extremities of tower R1A and R1B, will flow into tower R1B. The flow of wastes in tower R1B will go upwards (arrows B and A indicate the downward and upward flows in a the two towers). When the wastes have reached the top of tower R1B, they reenter the first tower R1A, through pipe 8.

The energy required to create the flow of wastes as described above between the first and second tower of a pair is supplied by an axial pump P3 located, for instance, at the top of the first tower. The pump P3 may be located elsewhere, for instance at the connection (pipe 7) between the bottoms of the two towers, or anywhere else in the circuit. Furthermore pump P3 could be replaced by an injection device (of the Venturi type) using as fluid energy either the liquid through pipe 6 or the oxygen flow used for

the biological oxidation.

The first tower R1A receives the biological oxidation fluid from a unit P01 which produces air and/or oxygen at the required pressure, shown in Figure 1, framed by a dotted line.

The P01 unit sucks air as shown by arrow W which is fed to a commercial compressor C1.

The compressed air from C1 is fed into a commercial apparatus U for the production of oxygen.

Such apparatus could use either molecular sieves or air fractionation. As indicated in the annexed schematic Figure 1, P01 may feed tower R1A (and tower R2A) oxygen, or air, or a mixture of both.

For that purpose the pipe 2 which connects compressor C1 to apparatus U splits into pipe 2A which connected to apparatus U through valve 2B, and into pipe 2C which connects directly to towers R1A and R1B through valve 2D.

From the oxygen producing apparatus U a pipe 2E connects to pipe 2C through valve 2F. Two commercial flow-meters F1 and F2, mounted respectively on pipes 2C and 2E will meter the flow of air and oxygen.

Due to the above described arrangement it is possible to feed the towers with air or oxygen only or with a mixture of both. In particular the capacity of the plant may be reduced by addition of air to oxygen to a 20% of the maximum (equivalent to the percentage of oxygen in air) without any variation of the flow-rate of the feeding gas. Obviously, partially loading the plant can be simply achieved by reducing the flow-rate of the oxygen feeding the towers. In this case, a load ranging from 0% to 100% of the design capacity is obtainable. This fact is particularly useful to reduce the operating costs when sharp overloading of the plant can occur. For example this is the case in vacation resorts.

The air and/or oxygen feed to the first tower R1A of the first pair and to the first tower R2A of the second pair is conveyed by means of a duct 13, split in two branches 13A and 13B, each one for one of the two towers. At the end of each branch, inside of the towers, a drilled duct 14 is provided, which introduces air and or oxygen to the interior of the towers in fine bubbles.

The arrangement of the pair of towers R2A, R2B is similar to that of the first pair R1. Also in this case, the first tower R2A receives the waste water, that is coming from the second tower R1B of the first pair through a duct 10, which conveys that waste water to the upper part of the tower R2A.

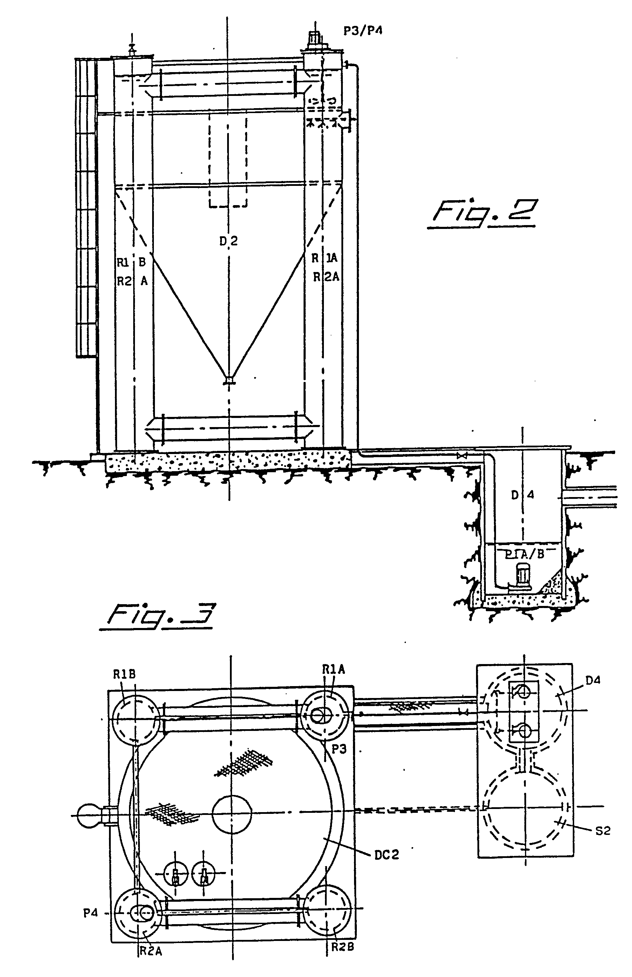

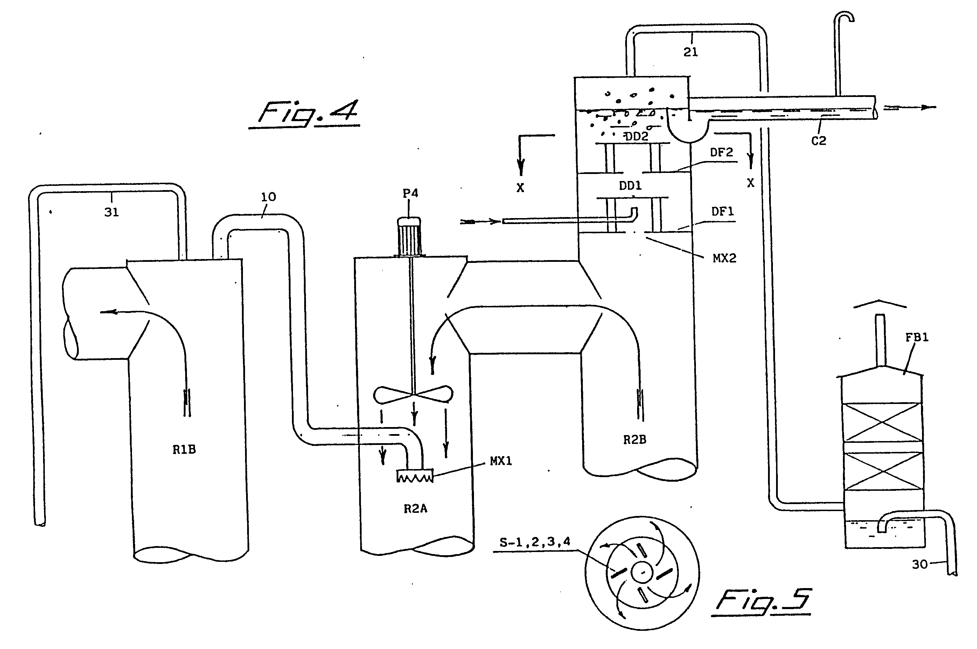

The duct 10 is designed in such a way as to convey the liquid, together with the unreacted gas, from the top of the tower R1B, to the tower R2A, below the impeller of the axial pump P4 (see Fig. 4). The introduction of the mixture in the tower R2A in performed through an apparatus MX1 such as a drilled pipe, grid or notched distributor as shown in the figure, in order to obtain a further subdivision of the fluid arriving from R1B with the one flowing down in R2A.

The towers of the second group are connected at the bottom by a duct 7a and at the top by a duct 8a. The flow of the waters is the same and in this case too is indicated by the arrows B and A for the two towers.

As for the plant, which is the subject-matter of the above mentioned patent, the downward speed of the water in the first tower R1A of the first group and in the first tower R2A of the second group is calculated so that the gas bubbles of any size will be dragged to the bottom. The manner, in which this is achieved has been described in detail in the above mentioned patent to which reference is made.

The wastes flow out of tower R2B, which is taller than the others, after addition of small quantities of antifoaming substances and floculants which are mixed to the outgoing flow by means of a static mixer MX2 (Fig. 4).

This mixer is composed by a number of drilled diaphragms DF1, DF2, . . ., between which are inserted a number of deflecting discs DD1, DD2, . . . These discs are held by a number of baffles S1, S2, S3, S4, in Fig. 4, the purpose of which is to give a rotary movements to the fluid thereby completely mixing the chemical agents and increasing their efficiency.

The reaction gases ($CO_2$ and nitrogen mainly) and the undissolved oxygen free themselves at the top of tower R2B where they are collected and conveyed through duct 21 to a bacteriostatic filter for venting. The filter is made of alternating packs of glass wool and active carbon so as to retain all pathogenous bacteria and other noxious substances. Condensed water from the filter, as well as liquids from occasional venting of tower R1B, are conveyed respectively through ducts 30 and 31 to the feeding tank D4.

In case of particular requirements due to special characteristics of the waste to be treated, each pair of towers will have in the second tower a complete system as described above for tower R2B.

From the top of the second tower of the second group R2B a duct C2 will convey the mixture of treated waters and active sludges to a first decanter DC1 which, in the structural example shown, is of the conical type.

Treated water will skim over its top, as shown by arrow Y in Fig. 1, while the sludges, which represent the biologically active agent for the oxidation of the wastes will be collected at the bottom. These sludges through duct 15 and its valve 15A, are conveyed to a second decanter DC2 (or an equivalent known thickening device), and from it, through duct 6B, to feeding tank D4.

Sludges in excess of the biological oxidation recycling requirements from the first or primary decanter DC1 may also be conveyed through branch 15B of duct 15, to a sludges storage tank S2, from which they can be disposed of by any known mean such as incineration, dessication, or used as fertilizer or source of biogas.

Furthermore, as shown in Fig. 1, duct 15 in addition to feeding the secondary decanter DC2 through valve 15C, can also convey the active sludges to duct 6B, through an interception valve 15D, downstream of the secondary decanter DC2. In this manner the secondary decanter DC2 may either be by-passed or operated together with the primary decanter DC1. This is particularly useful in case of a peaks and valleys operation and whenever additional concentration of the sludges is not strictly required.

A further feature of the process and apparatus under the present invention lies in the fact that the mixture of treated waters and active sludges which exit from tower R2B duct C2, is adequately treated with substances or agents particularly capable of increasing the compactness of the sludges. This treatment may either be in addition or an alternative to the same treatment provided for by mixer MX2 in the second tower R2B.

The antifoaming agents and the floculants are fed respectively through ducts 18 and 19 connected upstream respectively to a feeding tank AS for the antifoaming substances and a tank F for the floculants. Each of these two tanks will in turn be connected with relevant systems for the production of the agents not shown because they are already known.

Ducts 18 and 19 are connected downstream with mixer MX2 inside the second tower R2B and also to duct C2. The antifoaming agents and floculants are injected for the purpose of braking down the tensioactive property of the foam in the wastes which restrains sludges agglomeration and of favouring such agglomeration.

By means of the two above mentioned feeding systems final compaction of the sludges is extremely high.

Obviously each of the feeder tanks AS and F are provided with an adequate metering pump on the feeding circuits, indicated by P6 and P7.

The apparatus of the present invention, furthermore includes a separate unit for the supply of oxygen particularly to the biological oxidation towers, to the primary and secondary decanters, and to the sludges storage tank S2, which may operate as an alternative to the above mentioned unit P01 and will do so in case of a power failure.

For that purpose this alternative unit includes a pressurized oxygen tank PK1 which is connected to the above mentioned plant units through duct 20 and its derivations 20A, 20B, 20C, 20D, which will feed the oxygen to the bottom of the towers (20A, 20B), to the primary and secondary decanters DC1 and DC2 (20C) and to the active sludge storage tank (20D).

Automatic oxygen feed to these sections of the plant in case of power failure is triggered by valve EV inserted on duct 20, which remains closed when power is on and opens when power fails. Such type of valve is not described because the device is known.

The novelty and relevant advantages of the apparatus object of the present invention, described above are evident.

A first advantage lies in the extreme compactness of this type of plant which is significantly evidence by the comparison hereunder based on a treatment unit for from 1000 to 10.000 inhabitants.

A traditional plant operating with atmospheric oxidation open tanks, for the plant itself plus the protective area around it, as usually required by law, requires an area of 50.000 to 60.000 square metres.

A plant of similar capacity according to the present invention occupies an area of 200 to 300 square meters and does not legally require a protective area around it.

The reduction of the plant area for a plant under the present invention is evidenced by Fig. 2 and 3 which show that the four biological oxidation towes are placed at the four corners of a small square and that they support within that area the terminal decanter which in this example is the secondary decanter DC2. In case only the primary decanter DC1 is utilized, it would be supported by the towers.

Next to this compact unit are underground the wastes tank D4 and adjacent to it the active sludges tank S2.

This arrangement makes the plant area very small. Furthermore as the oxidation towers are totally filled with water no aeration chamber is required.

A further advantage is given by the fact that the plant object of the present invention will not send forth obnoxious odours or noxious aerosols, therefore it can be placed in the vicinity of inhabited areas. This means greatly reduced costs for land, ditch, digging, piping, etc. by comparison with a traditional plant.

Obviously, the plant according to the present invention will include all adequate structural solutions required for its safe operation which are not specifically mentioned here being known per-se as for instance the drainage circuits DR indicated in Fig. 1.

It is furthermore obvious that changes and/or modifications may be inserted in the specific details of the plant of this invention.

For instance, the oxydation towers which, in the example described herein are individually separated, may form one single body, of whatever section within which dividing walls of adequate height would separate for instance, the towers of the first group from the towers of the second group.

The wastes will always be conveyed from one to the other through duct 10 which in this case will run outside the single body encasing the towers.

The above mentioned walls will run the full height of the single body while additional partitions which will separate the towers of the same group will be shorter to allow the waste waters to flow from one tower to the other of the same group.

Finally, this single body constituting a plurality of towers may have any shape and/or section which may be found to be necessary, useful or expedient for the purpose.

## Claims

1. Apparatus for the treatment and purification of waste water comprising a unit for the biological oxidation of the water formed by a plurality of towers connected in series, at least one decanting system for the concentration and compaction of active sluges and a unit for recycling such sludges into the biological oxidation unit, and further comprising a unit for feeding into such sludges substances which will favour their compaction, and units capable of being operated at partial load for feeding air and/or oxygen to the biological oxidation unit, characterized by the fact that the towers of said plurality of towers (R1A, R1B, R2A), with the exception of the terminal tower (R2B), are arranged to be totally filled with water in operation and that the terminal tower (R2B) is taller than the other towers and the terminal tower (R2B) is arranged, in operation to be filled with water to a level higher than the water in the other towers (R1A, R1B, R2A) thereby to provide a static head of water in said other towers.

2. Apparatus according to claim 1, characterized by the fact that it comprises an autonomous oxygen feeder (PK1) connected to at least the biological oxidation unit (R1A, R2A, R1B, R2B) and the sludges decanters (DC1, DC2) through a device which automatically feeds oxygen in case of complete power failure.

3. Apparatus according to claim 2, characterized by the fact that the said autonomous oxygen feeder PK1) comprises a compressed oxygen tank having an outlet duct including a valve (EV) which is closed when power is on and opens automatically when power fails.

4. Apparatus according to claim 1, characterized by the fact that the last tower (R2B) is provided at at least one duct (21) for venting reaction gases and undissolved oxygen which is connected to at least a static filter (FB1).

5. Apparatus according to claim 1, characterized by the fact that the last decanter (DC2) is supported by said towers (R1A, R1B, R2A, R2B) arranged around its periphery.

6. Apparatus according to claim 1, characterized by the fact that the top of the tower (R1B) of a group is connected to the first tower (R2A) of the following group by a duct (10) which comprises at its terminal end within said first tower (R2A) a device (MX1) suitable to minutely divide and disperse the fluid conveyed by such duct.

7. Apparatus according to claim 1, characterized by the fact that such device (MX1) is either a drilled tube or a grid notched device.

8. Apparatus according to the preceding claims, characterized by the fact that the towers of the biological oxidation unit are formed as a single structure essentially composed of one single body provided internally with partitions defining said oxidation towers.

## Patentansprüche

1. Abwasserbehandlungs- und Abwasserreinigungsanlage, enthaltend eine biologisch wirkende Wasseroxidationseinheit aus mehreren serienverbindenden Türmen, mindestens ein Klärungssystem zur Konzentration und Verdichtung des aktiven Schlamms und eine Einheit zum Rücklauf des Schlammes in der biologisch wirkenden Oxidationseinheit, und enthaltend ausserdem eine Speiseeinheit zum Versorgen des genannten Schlammes mit verdichtungshelfenden Stoffen sowie bei Teilbelastung betätigbaren Einheiten zum Speisen von Luft und/oder Sauerstoff zur biologisch wirkenden Oxidationseinheit, dadurch gekennzeichnet, dass die Türme der genannten Mehrheit von Türmen (R1A, R1B, R2A), der Endturm (R2B) ausgenommen, derart angeordnet sind, dass sie in Betrieb völlig wassergefüllt werden, und der Endturm (R2B) höher als die anderen ist, und dass der Endturm (R2B) so angeordnet ist, dass er in Betrieb mit Wasser bis zu einem höheren Niveau als in den übrigen Türmen (R1A, R1B, R2A) gefüllt wird, damit ein statischer Wasserdruckfall in den genannten übrigen Türmen versorgt wird.

2. Anlage nach Anspruch 1, dadurch gekennzeichnet, dass sie einen unabhängigen Sauerstoffspeiser (PK1) enthält, der mindestens mit der biologisch wirkenden Einheit (R1A, R2A, R1B, R2B) und den Schlammklären (DC1, DC2) durch eine Einrichtung verbunden ist, die Sauerstoff im Fall von völligem Mangel an Triebkraft selbsttätig fördert.

3. Anlage nach Anspruch 2, dadurch gekennzeichnet, dass der genannte unabhängige Sauerstoffspeiser (PK1) einen mit einer ein Ventil (EV) eischliessenden Auslassleitung ausgerüsteten Behälter von gedrücktem Sauerstoff enthält, das in Anwesenheit des Stromes geschlossen ist und sich in Abwesenheit des Stromes selbsttätig öffnet.

4. Anlage nach Anspruch 1, dadurch gekennzeichnet, dass der letzte Turm (R2B) mit mindestens einer Leitung (21) zur Entlüftung von Umwandlungsgasen und nicht aufgelöstem Sauerstoff versehen ist, die mit mindestens einem statischen Filter (FB1) verbunden ist.

5. Anlage nach Anspruch 1, dadurch gekennzeichnet, dass die letzte Kläre (DC2) von den genannten, um ihre Peripherie angeordneten Türmen (R1A, R1B, R2A, R2B) abgestützt ist.

6. Anlage nach Anspruch 1, dadurch gekennzeichnet, dass die Krone des Turmes (R1B) einer Gruppe mit dem ersten Turm (R2A) der folgenden Gruppe durch eine Leitung (10) verbunden ist, die an ihrem Ende im genannten ersten Turm (R2A) eine Vorrichtung (MX1) zur dünnen Unterteilung und Dispersion der von solcher Leitung geförderten Flüssigkeit aufweist.

7. Anlage nach Anspruch 6, dadurch gekennzeichnet, Aass solche Vorrichtung (MX1) ein gelochtes Rohr oder eine gitterartige Vorrichtung ist.

8. Anlage nach den vorstehenden Ansprüchen, dadurch gekennzeichnet, dass die Türme der biologisch wirkenden Oxidationseinheit als eine einzige Struktur aus einem wesentlich einzigen Körper aufgebaut sind, der mit inneren, die genannten Oxidationstürme festsetzenden Zwischenwänden versehen ist.

## Revendications

1. Appareil pour le traitement et la purification d'eaux usées qui comprend une unité assurant l'oxydation biologique de l'eau et constituée par une pluralité de tours reliées en série, au moins un système de décantation pour la concentration et la compactation des boues actives et une unité de recyclage des boues dans l'unité d'oxydation biologique et qui, par ailleurs, comprend une unité assurant l'addition à ces boues de substances qui favorisent leur compactation et des unités capables de fonctionner avec une charge partielle pour introduire de l'air et/ou de l'oxygène dans l'unité d'oxydation biologique, caractérisé en ce que les tours constituant la pluralité de tours (R1A, R1B, R2A), à l'exception de la dernière tours (R2B) sont disposées de manière à être entièrement remplies d'eau au cours du fonctionnement, en ce que la dernière tour (R2B) est plus grande que les autres tours, en ce que la dernière tour (R2B) est disposée de manière qu'au cours du fonctionnement elle soit remplie d'eau jusqu'à un niveau supérieur à celui de l'eau dans les autres tours (R1A, R1B, R2A), ce qui donne une pression d'eau statique dans les autres tours.

2. Appareil selon la revendication 1, caractérisé en ce qu'il comprend un dispositif autonome d'introduction d'oxygène (PK1) relié au moins à l'unite d'oxydation biologique (R1A, R2A, R1B, R2B) et aux dispositifs (DC1, DC2) de décantation des boues par un dispositif qui introduit l'oxygène automatiquement en cas de panne complète de courant.

3. Appareil selon la revendication 2, caractérisé en ce que ledit dispositif autonome d'introduction d'oxygène (PK1) comprend un réservoir d'oxygène comprimé qui comprend une tubulure de sortie comportant une soupape (EV) qui est fermée lorsque le courant passe et qui s'ouvre automatiquement quand le courant est interrompu.

4. Appareil selon la revendication 1, caractérisé en ce que la dernière tour (R2B) comporte au moins un conduit (21) qui assure l'évacuation des gaz de réaction et de l'oxygène non dissous et qui est relié à au moins un filtre statique (FB1).

5. Appareil selon la revendication 1, caractérisé en ce que le dernier dispositif de décantation (DC2) est supporté par les tours (R1A, R1B, R2A, R2B) disposées à sa périphérie.

6. Appareil selon la revendication 1, caractérisé en ce que le sommet de la tour (R1B) d'un groupe est relié à la première tour (R2A) du groupe suivant par un conduit (10) qui comporte, à son extrémité situé á l'intérieur de la première tour (R2A) en question, un dispositif (MX1) conçu pour diviser finement et disperser le fluide amené par le conduit.

7. Appareil selon la revendication 6, caractérisé en ce que ce dispositif (MX1) est un tube perforé ou un dispositif à encoches en réseau.

8. Appareil selon les revendications précédentes, caractérisé en ce que les tours de l'unité d'oxydation biologique constituent une construction unique comportant un corps unique muni intérieurement de cloisons délimitant lesdites tours d'oxydation.

_Fig.1_

EP 0 108 730 B1

*Fig.2*

*Fig.3*

Fig.4

Fig.5

C2

21

DF2

DF1

MX2

DD2

DD1

X

X

P4

MX1

R2A

R2B

S-1,2,3,4

FB1

30

10

31

R1B